# EUROPÄISCHE PATENTANMELDUNG

(11) **EP 0 937 604 A1**
(43) Veröffentlichungstag der Anmeldung: **25.08.1999**
(21) Anmeldenummer: 98102772.5
(22) Anmeldetag: 18.02.1998
(51) Int. Cl.: B60N 2/24

(54) **Fahrgastsitz für ein Personenbeförderungsfahrzeug**

(71) Anmelder: Vogel Industrie GmbH, 76228 Karlsruhe (DE)
(72) Erfinder: Weiler, Klaus B.A., Dipl.-Ing., 76228 Karlsruhe (DE)
(74) Vertreter: Trappenberg, Hans

(57) **Zusammenfassung**

Ein Fahrgastsitz für ein Personenbeförderungsfahrzeug weist ein Sitzteil 1, 1a und ein Rückenteil 2, 2a, 2b auf. Das Sitzteil 1, 1a und das Rückenteil 2, 2a, 2b sind an einem separaten Sitzgestell 3 befestigt. Das Sitzgestell 3 ist auf einem Träger 4 angeordnet. Das Sitzgestell 3 besteht aus zwei in einem Abstand zueinander angeordneten Längsholmen 3a, 3b. Die Längsholme 3a, 3b weisen Ausnehmungen 5 auf, in welche am Rückenteil 2, 2a, 2b befestigte erste Fixierelemente 6 eingreifen.

## Beschreibung

Die Erfindung betrifft einen Fahrgastsitz für ein Personenbeförderungsfahrzeug, mit einem Sitzteil und einem Rückenteil, welche an einem separaten Sitzgestell befestigt sind, wobei das Sitzgestell auf einem Träger angeordnet ist.

Derartige Fahrgastsitze sind im Stand der Technik hinlänglich bekannt. Das Sitzgestell ist aus Stabilitätsgründen regelmäßig als Rohrrahmen ausgebildet. An dem Rohrrahmen ist das Sitzteil und das Rückenteil befestigt. Der dieser Art gebildete Sitz wird auf einem Querträger aufgeschraubt, welcher seinerseits auf auf dem Boden des Fahrzeugs angeordneten Stützfüßen angeordnet ist.

Die Ausbildung des Sitzgestells als Rohrrahmen ist aufwendig, was sich nachteilig auf die Kosten auswirkt. Darüber hinaus ist ein derartiger Rohrrahmen relativ schwer. Dies ist sehr ungünstig, da bei der Vielzahl von Fahrgastsitzen in dem Personenbeförderungsfahrzeug das Gesamtgewicht des Fahrzeugs dadurch erheblich vergrößert wird.

Aus der DE-GM 74 26 463 ist ein Fahrgastsitz, insbesondere für die Linienbestuhlung von Omnibussen bekannt, welche aus einem Sitzuntergestell mit einem darauf angeordneten Rahmen für die Sitzfläche und einer daran oder am Sitzuntergestell angebrachten Rückenlehne besteht. Der Rahmen für die Sitzfläche ist fest mit der Rückenlehne verbunden und ist unterhalb des Sitzschwerpunktes durch eine Traverse versteift. Die Traverse ist fest mit einem Ovalrohr, dessen große Achse quer zur Traverse liegt, verbunden. Rahmen und Rückenlehne sind einstückig, vorzugsweise aus Stahlrohr, gebogen.

Des weiteren ist aus der DE 38 29 091 C2 ein am Aufbau eines Fahrzeugs festgelegtes Traggestell zur Aufnahme mindestens eines Fahrzeugsitzträgers bekannt, welches quer zur Fahrtrichtung mittig verlaufende Träger aufweist, auf welchen der Fahrzeugsitz angeordnet ist. Zumindest die Rückenlehne des Fahrzeugsitzes weist Längsträger auf, welche mittels einer Quertraverse miteinander verbunden sind.

Des weiteren ist aus der EP 0 568 714 A1 ein Fahrgastsitz bekannt, welcher aus zusammenzufügenden Baugruppen Untergestell, Sitzteil und Rückenlehne besteht. Die Baugruppen sind montagefertig vorbereitet, wobei die Baugruppen Sitzteil und Rückenlehne jeweils mit Aufnahmeschalen und Befestigungsvorrichtungen zur Aufnahme von Polstereinheiten versehen sind. Über die Ausgestaltung des Sitzgestells können der Druckschrift keine Angaben entnommen werden.

Es ist Aufgabe der Erfindung, einen eingangs genannten Fahrgastsitz derart auszubilden, daß er einfacher herzustellen ist und ein geringeres Gesamtgewicht aufweist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung besteht das Gestell aus zwei in einem Abstand zueinander angeordneten Längsholmen, welche Ausnehmungen aufweisen, in welche am Rückenteil befestigte erste Fixierelemente eingreifen. Dadurch, daß die am Rückenteil befestigten ersten Fixierelemente in die Ausnehmungen eingreifen, werden die Längsholme in Querrichtung in ihrem Abstand zueinander fixiert. Das Rückenteil wirkt durch seine mittels der in den Ausnehmungen sitzenden ersten Fixierelemente geschaffene feste Verbindung mit den Längsholmen als Querstrebe. Das Sitzgestell eines erfindungsgemäß ausgebildeten Sitzes hat daher auch in Querrichtung dieselbe Stabilität wie ein als Rahmen ausgebildetes Sitzgestell.

In vorteilhafter Weise sind die Längsholme als Profilstäbe ausgebildet, welche im Querschnitt einen rechteckigen Kasten aufweisen, an welchem wenigstens eine T-Nut-förmige Befestigungsschiene angeordnet ist, welche die Ausnehmungen bildet. Ein derart ausgebildeter Längsholm zeichnet sich zum einen durch seine hohe Stabilität aus und bringt darüber hinaus den weiteren Vorteil, daß in den Längsholmen keine besonderen Ausnehmungen mehr ausgebildet werden müssen. Darüber hinaus lassen sich derart ausgebildete Längsholme auf einfache Weise auf dem Träger montieren.

Eine weitere besondere Ausführungsform der Erfindung sieht vor, daß das Rückenteil einen als Handgriff ausgebildeten oberen Abschluß aufweist, an welchem die ersten Fixierelemente ausgebildet sind, und welcher beim Einbringen der ersten Fixierelemente in die Ausnehmungen die Längsholme in Querrichtung miteinander verbindet. Durch diesen modularen Aufbau läßt sich der erfindungsgemäß ausgebildete Fahrgastsitz nicht nur auf einfache Weise montieren, sondern die Ausgestaltung des Sitzes ermöglicht es auch noch, den oberen Abschluß stabiler als das übrige Rückenteil auszubilden, wodurch die Stabilität des Sitzgestells erhöht wird.

Bei dem als Handgriff ausgebildeten oberen Abschluß können die ersten Fixierelemente als Stege ausgebildet sein, welche in die T-Nut-förmigen Befestigungsschienen eingeschoben werden können. Hierdurch ist neben einer sicheren Befestigung auch noch eine schnelle Montage des erfindungsgemäß ausgebildeten Fahrgastsitzes möglich.

In besonders vorteilhafter Weise kann das Sitzteil zweite Fixierelemente aufweisen, welche in an den Längsholmen ausgebildete zweite Ausnehmungen eingreifen. Durch die am Sitzteil angeordneten zweiten Fixierelemente werden die Längsholme auch im Bereich des Sitzteils in einem festen Abstand zueinander fixiert. Wenngleich eine Fixierung der Längsholme durch die am Sitzteil ausgebildeten zweiten Fixierelemente auch besonders günstig ist, so könnte sie jedoch entfallen, wenn die Längsholme auf dem Träger fest montiert werden. Dies kann beispielsweise durch Verschrauben der Längsholme mit dem Querträger geschehen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:

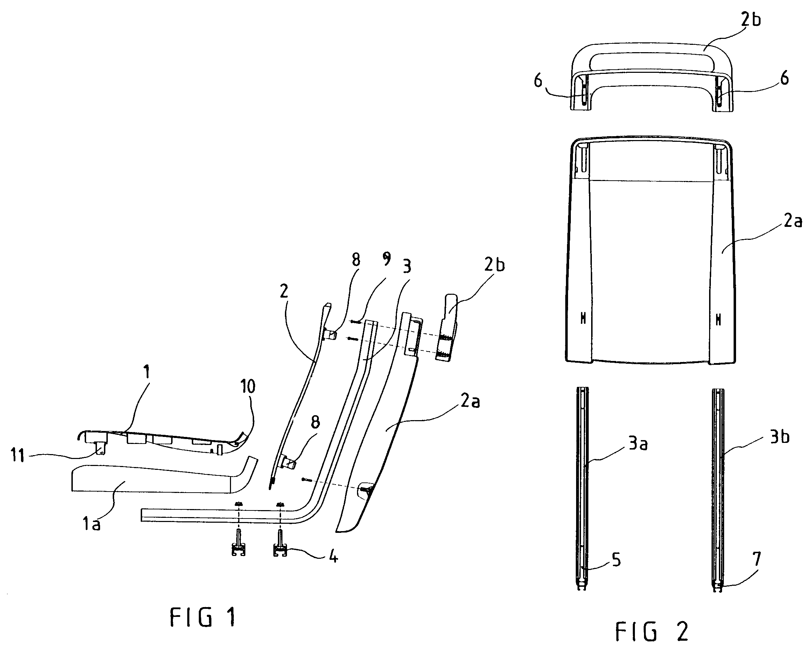

Fig. 1 eine schematische Anordnung eines erfindungsgemäß ausgebildeten Fahrgastsitzes in Explosionsdarstellung in Seitenansicht und
Fig. 2 die Längsholme und das Rückenteil eines erfindungsgemäß ausgebildeten Fahrgastsitzes in Explosionsdarstellung von vorne.

Ein Fahrgastsitz für ein Personenbeförderungsfahrzeug weist zwei in einem Abstand zueinander parallel verlaufende Längsholme 3a, 3b auf. Die Längsholme 3a, 3b sind als Profilstäbe ausgebildet, welche im Querschnitt einen rechteckigen Kasten 7 aufweisen, an welchem an gegenüberliegenden Seiten T-Nut-förmige Befestigungsschienen angeordnet sind.

Der Fahrgastsitz weist des weiteren ein Rückenpolsterteil 2 und eine Rückenschale 2a auf. Das Rückenpolsterteil 2 wird mittels Klammern 8 mit den Profilschienen 3a, 3b verbunden. Die Rückenschale 2a wird mit den Profilschienen 3a, 3b verschraubt. Die Rückenschale 2a weist an ihrem oberen Ende eine Aussparung auf, in die ein Handgriff ausgebildeter oberer Abschluß 2b einsetzbar ist. Der obere Abschluß 2b weist Stege 6 auf, welche in die T-Nut-förmige Befestigungsschiene 5 einschiebbar sind. Hierdurch werden die Profilstäbe 3a, 3b an ihren oberen Enden in Querrichtung in einem bestimmten Abstand zueinander fixiert. Durch seine mittels der in den Befestigungsschienen sitzenden Stege 6 gebildete feste Verbindung mit den Profilstäben 3a, 3b wirkt der obere Abschluß 2b als Querstrebe des Sitzgestells 3.

Nachdem die Stege 6 des oberen Abschlusses 2b in die T-Nut-förmigen Befestigungsschienen 5 eingeschoben sind und sich der obere Abschluß 2b in der Aussparung der Rückenschale 2a befindet, wird der obere Abschluß 2b mittels Schrauben 9 mit den Profilstäben 3a, 3b verschraubt. Hierdurch ist der obere Abschluß 2b gegen unbeabsichtigtes Entfernen aus der Aussparung gesichert.

Der in den Fig. gezeigte Fahrgastsitz weist des weiteren ein Sitzpolsterteil 1 und eine Sitzschale 1a auf. Die Sitzschale 1a wird einerseits mittels nicht gezeigter Schrauben mit den Profilstäben 3a, 3b und andererseits mittels zweiter, nicht gezeigter Stege mit den Profilstäben 3a, 3b verbunden. Hierzu werden die zweiten Profilstäbe in die T-Nut-förmigen Befestigungsschienen der Profilstäbe 3a, 3b geschoben. Die zweiten Stege erstrecken sich vom vorderen Rand der Sitzschale 1a etwa 10 cm in Richtung hinteres Ende der Sitzschale 1a.

Zur Befestigung des Sitzpolsterteils 1 werden die Hervorstehungen 10 in entsprechende, in der Sitzpolsterschale 1a ausgebildete Ausnehmungen gesteckt, so daß ein Hintergriff entsteht. Die Klammern 11 greifen durch entsprechende Ausnehmungen in der Sitzpolsterschale 1a auf die Profilstäbe 3a, 3b und umklammern diese.

Durch die an der Sitzpolsterschale 1a ausgebildeten zweiten Stege, welche in den T-Nut-förmigen Befestigungsschienen sitzen, werden die Profilstäbe 3a, 3b auch an ihren vorderen Enden in Querrichtung in einem bestimmten Abstand zueinander fixiert. Die Sitzschale 1a wirkt somit als Vorderquerstrebe des Sitzgestells 3.

Die Profilstäbe 3a, 3b werden mittels Schrauben 12 mit einem Querträger 4 verbunden. Durch die Schraubverbindung werden die Profilstäbe 3a, 3b ebenfalls in Querrichtung in einem bestimmten Abstand zueinander fixiert. Die sich am vorderen Ende der Profilstäbe 3a, 3b in den T-Nut-förmigen Befestigungsschienen befindlichen Stege der Sitzschale 1a könnten somit entfallen.

## Patentansprüche

1. Fahrgastsitz für ein Personenbeförderungsfahrzeug, mit einem Sitzteil (1, 1a) und einem Rückenteil (2, 2a, 2b), welche an einem separaten Sitzgestell (3) befestigt sind, wobei das Sitzgestell (3) aus zwei in einem Abstand zueinander angeordneten Längsholmen (3a, 3b) besteht, welche in Querrichtung in einem Abstand zueinander fixiert sind, und das Sitzgestell auf einem Träger (4) angeordnet ist,
dadurch gekennzeichnet,
daß die Fixierung der Längsholme (3a, 3b) in Querrichtung durch das Rückenteil (2, 2a, 2b) vorgenommen wird, wobei die Längsholme (3a, 3b) Ausnehmungen (5) aufweisen, in welche am Rückenteil (2, 2a, 2b) befestigte erste Fixierelemente (6) eingreifen.

2. Fahrgastsitz nach Anspruch 1,
dadurch gekennzeichnet,
daß die Längsholme (3a, 3b) als Profilstäbe ausgebildet sind, welche im Querschnitt einen rechteckigen Kasten (7) aufweisen, an welchem wenigstens eine T-Nut-förmige Befestigungsschiene angeordnet ist, welche die Ausnehmungen (5) bildet.

3. Fahrgastsitz nach Anspruch 1 oder 2,
dadurch gekennzeichnet,
daß das Rückenteil (2, 2a, 2b) einen als Handgriff ausgebildeten oberen Abschluß (2b) aufweist, an welchem die ersten Fixierelemente (6) ausgebildet sind, und welcher beim Einbringen der ersten Fixierelemente (6) in die Ausnehmungen (5) die Längsholme (3a, 3b) in Querrichtung miteinander verbindet.

4. Fahrgastsitz nach einem der Ansprüche 1 bis 3,
dadurch gekennzeichnet,
daß das Sitzteil (1) zweite Fixierelemente aufweist, welche in an den Längsholmen (3a, 3b) ausgebildete zweite Ausnehmungen eingreifen.
